# EUROPEAN PATENT APPLICATION

(11) **EP 3 517 189 A1**
(43) Date of publication of application: **31.07.2019**
(21) Application number: 17800557.5
(22) Date of filing: 18.09.2017
(51) Int. Cl.: A63F 13/21, A63F 13/217, A63F 13/23, A63F 13/24, A63F 13/98

(54) **SYSTEM AND METHOD FOR MULTI-SENSOR DATA CAPTURE AND STORAGE FOR IMPROVING GAMING EXPERIENCE IN VIDEO GAMES**

(30) Priority: 19.09.2016 ES 201600641 U
(71) Applicant: Melbot Studios, S.L., 08027 Barcelona (ES)
(72) Inventor: EXPÓSITO SÁNCHEZ, Iván, 46529 Canet d'en Berenguer (ES); MONTERO GONZÁLEZ, David, 08027 Barcelona (ES); EXPÓSITO SÁNCHEZ, Miguel Ángel, 46529 Canet d'en Berenguer (ES)
(74) Representative: Sugrañes Patentes y Marcas
(86) International application number: PCT/ES2017/070618
(87) International publication number: WO 2018/050943

(57) **Abstract**

The system and method of capturing and storing multi-sensor data for improving gaming experience in video games comprising an electronic computational device provided with a software experience or video game; and a toy provided with an accessory device for capturing and storing multi-sensor data on the inside thereof, said software experience or video game being adapted for comparing said data, once they have been transmitted, with victory or defeat conditions of the software experience or video game.

## Description

### Technical field

The present invention belongs to the entertainment sector and more specifically to that of smart toys and video games.

The main object of the present invention, as expressed in the title of this Specification, relates to a system and method of capturing and storing data by means of an accessory device for capturing and storing multi-sensor data equipped with several sensors, for the use thereof in improving the experience of playing video games. The accessory device carries out periodic and programmed measurements of the environment where it is situated and it stores them, in order to transmit them later in the form of coded data to an electronic computational device (it being able to be a personal computer, a laptop computer, a console, a smartphone, a tablet or a smart watch), said transmission can occur in real- or delayed-time and can be carried out wirelessly or alternatively by using a physical connection by means of a cable. Once transmitted, the data are used for a software experience in the form of an executable program or pre-installed application (hereinafter video game) in an electronic computational device in order to be able to provide a better gaming experience to the users thereof.

### Background of the invention

Devices for capturing data with sensors are used in a wide variety of fields such as medicine, measurement of physical activity, meteorology, surveillance systems or scientific applications, to name a few. Some of them are even used in combination with mobile devices.

In the video game sector, devices for capturing data with sensors are used as peripheral controllers, whether in remote controls or cameras that capture movement by way of peripheral controller.

In the video game sector, other types of peripherals are used, by way of collectible figurines that integrate an internal storage memory and the capacity to wirelessly transmit data through the standardized radio frequency identification system. Said figurines represent characters that appear inside the video game once they are placed in another additional base-shaped peripheral which acts as a reader for the radio frequency identification and that is connected to the game device.

Said collectible figurines can store the status of the game in the internal memory thereof, in order to continue it in another gaming device that has the base and executes the video game, or in the same device where the game session was started.

Until now, in the video game sector, both the control peripherals that incorporate sensors for capturing data and the peripherals by way of collectible figurines do not influence the game dynamics in both directions, from the video game to the real world and from the real world to the video game, for which reason the gaming experience is able to be improved.

Thus, an object of the present invention is to create immersive game dynamics that extend the rules of the game beyond the gaming device itself, also encompassing actions that must be carried out in the real world, being accompanied by the gaming device wherein the video game is executed or not and thus way improving the gaming experience of the user.

### Description of the invention

The system for capturing and storing multi-sensor data for improving gaming experience in video games of the present invention comprises an electronic computational device provided with a software experience or video game; and a toy, also called a host object, provided with an accessory device for capturing and storing multi-sensor data on the inside thereof, also known by its acronym DCADMV, the accessory device being an autonomous device and small in size, the accessory device comprising a casing that contains sensors such as temperature, moisture, movement, light, ultrasonic, inclination and positioning sensors, in addition to all of the electronic components necessary for the operation thereof, all of these mounted in a motherboard, said software experience or video game being adapted for comparing said data, once they have been transmitted from the accessory device to the electronic computational device through a bidirectional communication channel, with victory or defeat conditions of the software experience or video game, by way of physical challenge. It is envisioned that said victory or defeat conditions of the software experience or video game can be pre-installed in the video game or can be added later on, for example by means of the connection of the software experience or video game to a remote server. Therefore, said victory or defeat conditions are related to multi-sensor data that the accessory device transmits, usually associated to physical tests to be carried out with the game. These victory or defeat conditions can be associated to modify the appearance of characters and/or can make up part of interactions that are proposed to the user and that the user has to carry out with the toy provided with the accessory device for capturing and storing multi-sensor data.

Naturally, it is envisioned that different embodiments of the accessory device can incorporate different assemblies of sensors, sensor being understood as a transducer that converts a physical magnitude into an electrical signal, for which reason the type of sensor and the number thereof can vary widely and under no circumstance would be solely limited to the types of sensors listed in this specification, rather that it is even envisioned that new sensors that come out may be incorporated in the invention.

The toy can be any type of object susceptible to housing the accessory device for capturing and storing multi-sensor data on the inside thereof, and it is not limited to being a traditional toy, but that within the scope of the invention any physical object could be considered a toy.

In a variant embodiment, the bidirectional communication channel is a connection cable.

In a variant embodiment, it is envisioned that the connection cable can comprise four-pole 3.5mm audio terminals, adapted to connect the accessory device for capturing and storing multi-sensor data and the electronic computational device.

In another variant embodiment, it is envisioned that the bidirectional communication channel is wireless, the bidirectional communication channel being able to be based, for example, on the IEEE 802.15.1 communication protocol, naturally in any of the variants thereof.

In a variant of interest, it is envisioned that the electronic computational device is a mobile device, such as a smartphone- or tablet-type telephone device.

In another variant embodiment, it is envisioned that the system further comprises a remote server adapted to store the captured and transmitted data to the video game on a user account.

A method is also disclosed for the interaction with a software experience or video game that comprises the steps of capturing multi-sensor data in an accessory device for capturing and storing multi-sensor data of a toy; transmitting the multi-sensor data through a bidirectional communication channel to an electronic computational device provided with the software experience or video game; and comparing the multi-sensor data with the victory or defeat conditions of the software experience or video game. Said victory or defeat conditions of the software experience or video game can entail modifying the appearance of characters or can be based on interactions that the user has to carry out with the accessory device for capturing and storing multi-sensor data and, by extension, with the toy.

In a variant embodiment, the method further comprises the step of storing the previously captured multi-sensor data in the accessory device for capturing and storing multi-sensor data before transmitting the multi-sensor data through a bidirectional communication channel to the electronic computational device.

In a variant of interest, the method further comprises storing the data that was captured and transmitted to the electronic computational device on a user account hosted on a remote server.

In another variant embodiment, the method further comprises the step of updating the firmware of the accessory device for capturing and storing multi-sensor data by using the bidirectional communication channel.

In a variant of interest, the method further comprises the step of obtaining the victory or defeat conditions associated to multi-sensor data from a remote server. Preferably, the step of obtaining the victory or defeat conditions associated to multi-sensor data from the remote server is carried out by means of redeeming a previously obtained code.

The accessory device that makes up the invention is a compact, portable, autonomous and small sized electronic device that can be housed inside other items due to the small dimensions thereof, but that can also be used by itself. Said items can be figurative representations of fictitious characters or of other objects such as eggs, plants or talismans, to cite some examples.

The system of the present invention further comprises a digital software experience in the form of an executable program or application (hereinafter video game) that is necessary for the operation thereof and that should be previously installed in an electronic computation device that, depending on the preferred embodiment, can be a personal computer, laptop, a console, a smartphone, a tablet or a smart watch.

The readings captured by the accessory device influence the game dynamics that the user experiences in the video game installed in the electronic computational device and the video game in turn can suggest actions to the user that should be carried out in the real world so that the accessory device can take determined predefined readings, in this way creating interesting dynamics that go in both directions, from the video game to the real world and from the real world to the video game.

Each accessory device is uniquely assigned to a user account; the user must create a user account in the video game as a necessary condition to be able to play. The data exchanged between the accessory device and the electronic computational device are locally stored both in the accessory device and in the electronic computational device on said user account, once they have been transmitted. Said data can be used in the video game for multiple purposes, such as: modifying the behavior and the appearance of characters, creating or destroying characters, modifying game rules, modifying game scenarios, modifying user classifications and scores and modifying any victory or defeat condition in general.

There is a community of users, the data from each of the respective user accounts being stored on a remote server. Said data is updated when the electronic computational device in which the video game is installed connects to the remote server using telematics information transmission means such as the internet. The updating of user account data on the remote server happens in an asynchronous manner and it is not necessary for the electronic computational device to have a telematics connection in order to use the DCADMV to even play the video game.

Additionally, when two or more accessory devices are in physical proximity, an event with an associated time code is generated in the memory of the different accessory devices involved and a visual and auditory response is generated by the same; furthermore, this event influences the game dynamics of each of the users in their respective sessions in their respective video games installed in their respective electronic computing devices.

Those skilled in the art will understand that the improvements and the benefits provided by the invention described above relate to a preferred embodiment of the invention or to different preferred embodiments of the invention, as long as they do not depart from the scope of the contents of this specification.

The accessory device comprises a closed sheath-shaped housing that is small in size containing a motherboard with a printed circuit in which all the electric and electronic components necessary for the operation thereof are soldered and/or mounted. Said circuit is powered by a replaceable battery that is also installed inside the casing. Such that the operation thereof is completely autonomous since it does not need external power; and in the cases in which wireless data transmission can be carried out between the accessory device and the electronic computational device, a data transmission cable will not be necessary either.

Due to the foregoing, it can be concluded that the accessory device is a totally autonomous and portable device.

The main electronic components that the accessory device comprises are the microcontroller, the internal memory, the different sensors, the status indicators and the components dedicated to receiving and transmitting data. However, other secondary electronic components such as resistors and capacitors may be necessary for the operations of the circuit.
- The microcontroller: It is responsible for executing the control commands set in the form of a digital algorithm that coordinates the operation of the other electronic components. This command set (also called firmware) is pre-installed in the internal memory and can be updated from the electronic computational device when it and the accessory device are connected by means of a connection cable or wirelessly. The firmware defines the measurement intervals of the different sensors and other parameters. The microcontroller also processes the readings from the different sensors that, once processed, are stored in the internal memory together with a temporary code and other metadata. The microcontroller also performs inner clock operations and sends the pertinent signals to the status indicators when a status change event is generated for the user.
- The Internal memory: It stores the firmware that is executed from the microcontroller and the updates thereof. Additionally, it is responsible for storing the previously processed data from the different readings of the different sensors.
- The sensors: The set of sensors comprises but is not limited to temperature sensors, light sensors, moisture sensors, inclination sensors, gravity sensors (also called accelerometers), magnetic sensors or magnetic compasses, ultrasonic or proximity sensors and geolocation or GPS sensors.
- The status indicators: They are electronic components dedicated to emitting auditory and visual status signals so that the user is aware of the status of the accessory device in certain determined moments of the experience. The status indicators comprise but are not limited to light-emitting diodes, electronic buzzers, polyphonic speakers, piezoelectric speakers, liquid-crystal screens and E ink screens.
- The components for transmitting and receiving data: In order to connect to the electronic computational device, the accessory device can indistinctly use a data transmission cable or it can use wireless communication. The data transmission cable is connected to a data input and output port installed in the motherboard of the accessory device, it being able to have different preferred embodiments, four-pole 3.5mm audio terminals, micro USB terminals, USB-C or any type of standard terminals that enable data transmission. Alternatively, the DCADMV can use a wireless communications channel by using version 4 u of the IEEE 802.15.1 protocol, in different preferred embodiments, other wireless communication protocols that are suitable for this purpose, such as Wi-Fi (registered trademark) Wi-Fi Direct (registered trademark), NFC or 802.15.4 protocol, etc.

The battery is replaceable and once it is connected to the main circuit, the accessory device is always on, whether in sleeping state or capturing the data defined by the most recent algorithm transmitted from the electronic computational device and that is being executed in the microcontroller. The accessory device will stay in operation until the battery runs out.

The casing of the accessory device is made of thermoplastic material and because of the contained dimensions and the shape factor thereof it can be housed in other objects as long as said objects have a receptacle in the inside thereof or enough space inside, if they are hollow. The casing is made up of two portions such that it enables the assembly of the motherboard on the inside thereof and it closes on itself, thus capturing said board. In order to maintain the two portions of the casing of the accessory device together, standardized fastening elements could be used such as screws, self-locking clips that are molded into the casing itself, adhesives or ultrasonic soldering.

In other preferred embodiments, the design of the casing of the accessory device can be adapted to different shapes with the goal of taking on the appearance of a toy or of a representational element, such as for example an articulated figurine or a jewelry accessory, such as a pendant. The casing of the DCADMV always has the necessary windows so that the sensors housed on the inside thereof can take readings from the environment, so that the status indicators can be seen or heard from the outside and so that a cable can be connected to the data port. The casing of the accessory device also has a hatch necessary for replacing the battery. In those preferred embodiments in which the accessory device is resistant to water and/or submersible, said windows, as well as the hatch for replacing the battery, are conveniently sealed in order to prevent the inlet of water in the electronic circuit.

The accessory device has a data input and output port in the form of a female terminal, it being able to, in turn, have different preferred embodiments, four-pole 3.5mm audio terminals, micro USB terminals, USB-C or any type of standard terminals that enable data transmission. It is accessible for the user and a data transmission cable can be connected therein that has the data connection terminals that are compatible with the accessory device and the electronic computation device where the video game is installed.

In the case of the electronic computation device in which the video game is installed having a wireless data input and output port that is IEEE 802.15.1 version 4, in different preferred embodiments, other wireless communication protocols suitable for this purpose, such as Wi-Fi (registered trademark) Wi-Fi Direct (registered trademark), NFC or 802.15.4 protocol, in different preferred embodiments the accessory device can connect to it without using cables.

At specific moments of the experience and as a progress condition, the video game asks that the user connect the accessory device to the electronic computation device. The video game recognizes what type of data port it has available and gives the user the precise instructions as to how they should carry out the connection and/or pairing, regardless of whether a connection cable or wireless data transmission will be used.

In the case of using a data transmission cable, the user must insert the male terminal of the cable into the accessory device and the other male terminal into the electronic computation device, both manually. When the connection is carried out, the accessory device emits predetermined auditory and visual signals so that the user knows that the connection has been carried out.

In the case that a wireless data transmission is used, the user must follow the instructions that the video game shows on the screen in order to make the pairing and/or the connection. When the connection is carried out, the accessory device emits predetermined auditory and visual signals so that the user knows that the connection has been made.

Each time the accessory device connects to the electronic computational device whether it be wirelessly or by means of the connection cable, there is a bidirectional communication. All the stored data from readings is downloaded from the accessory device to the mobile device and new instructions are passed from the electronic computational device to the accessory device that define the protocol that the accessory device will follow in order to take new measurements from the environment thereof in the form of a firmware update.

The updating process is always carried out with an embedded redundancy protocol in order to prevent the accessory device from staying locked because of a connection error during the firmware update.

The data transmitted from the accessory device to the electronic computation device are stored in the local memory of the device and are immediately used by the video game. When the electronic computation device has a connection to a data exchange network such as the internet, said data that are recorded and processed by the accessory device are transmitted to a remote server that stores them on a user account of a player together with a temporary code and other metadata. The data of all the users that are stored on the remote server are used to configure user classifications and global rankings apart from being analyzed in order to identify relevant gameplay patterns that can be used to improve the user experience.

The accessory device must be used with an electronic computational device that has an operating system that enables the execution of programs or applications, which has an internal storage memory, which has wireless communication capacity and/or has at least one data input and output port. Those skilled in the art will be able to understand that by being a video game, a necessary condition to be able to use it in the electronic computation device is that it has a graphical user interface, that it be visible on a screen and that it has control peripherals such as a touch screen, keyboard, mouse, remote control, etc... the improvement or the alteration of said methods of interaction with the electronic computation device not being an object of this invention.

From now on, it will be understood that when an interaction proposed by the video game is described, it means that the video game executes the pertinent computational algorithms so that the user perceives said message through the graphical user interface. In turn, it is understood that when the user interacts with the electronic computation device, they will do so by means of the methods that it has, without these interactions with it or with the electronic computation device being an object of this invention.

The video game can be installed in the electronic computation device by using a solid-state support that can be read by the device such as a solid-state drive, a USB drive, a CD-ROM or a DVD and can also be distributed to the electronic computation devices through a data exchange network (such as the internet, for example), whether it be through an ethernet cable or wirelessly through Wi-Fi (registered trademark) as long as the device has a connection to a telematic data transmission network. Alternatively, the electronic computational device can download, as long as it has a telematic data transmission network, portions of software dedicated to updating the video game or correcting errors. Said updates can be invisible to the user or by contrast they can be requested by them, even being able to be acquired by paying an additional price to the purchase of the original product.

In this way, it is recognized that the executable command set in algorithm form that regulates the operation of the microcontroller and thus the general operation of the accessory device (firmware), as well as the executable command set in algorithm form that the experience software installed in the electronic computation device (video game) is made up of, can be products with commercial value by themselves.

Once the video game is installed in the electronic computational device, one of the first steps in order to be able to play is to create a user account on which data is able to be collected such as the full name, password, alias used in the game, age, location, date of birth, picture and other relevant identification data, said data are securely coded and stored in the memory of the electronic computational device and transmitted to the remote server when a network connection is available. In that moment, a unique user identifier is created that is used by the firmware and video game during the entire experience.

When the accessory device connects to the electronic computational device for the first time, the unique user identifier is transmitted to it, which is permanently recorded in the memory of the accessory device, such that a relationship of ownership is established and from that moment on all the data transmissions between the accessory device and vice versa will be associated with said identifier.

Other data transmitted to the accessory device comprises but is not limited to: complete user account data, gameplay data relative to the game session, commands related to the readings from the sensors.

The accessory device also transmits data to the electronic computational device in this first connection, these data comprise but are not limited to: manufacturing data such as series and version numbers.

In successive connections between the accessory device and the electronic computational device, a predefined communication protocol is executed between both devices wherein, first, the previously processed reading data are downloaded and then the firmware of the accessory device is updated, and while this occurs, the user receives the appropriate status signals, whether it be through the status indicators of the accessory device or through the graphical user interface of the electronic computational device.

During the gaming experience, certain victory or defeat conditions necessary to progress will be associated to the measurements that the accessory device has taken or must take from the environment where it is situated in the real world, it being able to propose missions or recipes to the user. Said measurements to be satisfied, in the form of a recipe or mission can be those corresponding to running with the accessory device, sleeping with the accessory device, putting it in water, taking it to school or work, to mention a few examples. The remote server continuously contrasts the data taken with the assigned mission or recipe in order to be increasingly precise upon evaluating the fulfillment of the mission or recipe. The data taken or that the accessory device should take can also be used to unlock new characters or unlock minigames inside the main video game. Said measurements comprise but are not limited to the temperature, light, moisture, magnetism, ultrasonic, movement, inclination and geolocation data from the immediate environment where the accessory device is found. Said measurements are taken at continued and cyclical intervals that are predefined by the algorithm of the video game. In some preferred embodiments of the invention, said intervals can be modified by the user. On some occasions, the video game can establish a condition in which the user must position the accessory device in proximity to other accessory devices of other users during a certain period of time, this condition can be necessary in order to unlock characters, exchange characters, take more precise measurements of the environment, play in teams or other game elements.

The user can also interact directly with the accessory device without needing the electronic computational device as part of the game dynamics.

Moreover, the user can also interact with the video game without needing to use the accessory device.

In some preferred embodiments, the user can choose to pay in order to acquire additional accessory devices or unlock additional parts of the software, such as but not limited to characters, special abilities, accessories for the characters or minigames. The user can acquire redeemable codes in physical stores such as newsstands, department stores or bookstores or alternatively they can choose to acquire said codes by using a digital distribution network such as Google Play (registered trademark), App Store (registered trademark) or Steam (registered trademark) among others, by using the payment methods admitted by said platforms.

The accessory device and the video game can operate without the electronic computational device having a network connection but those skilled in the art will be able to understand that in order to carry out updates of the video game or to make purchases in digital distribution networks, said connection is necessary.

When the electronic computational device where the video game is installed has a network connection, a communication channel is automatically established with the remote server. In said data transmission, all the local information of the user account stored in the accessory device and by extension in the electronic computational device since the last connection, the updated classification data of the user and the pertinent updates of the software is exchanged.

The video game can generate notifications for the user in the form of push notifications, text messages and emails, which are sent from the remote server and that the user can open by using their electronic computational device.

Several users can use the same video game installed in one single electronic computational device as long as they create different user accounts.

Thus, the accessory device for capturing and storing multi-sensor data for improving the gaming experience in video games, which is also known by the initials DCADMV (in Spanish), is characterized in that it is autonomous and small in size, such that it can be housed inside other host objects, these being able to take any shape and comprising a casing, which can be cylindrical, which contains all the sensors, these being able to be temperature, moisture, movement, light, ultrasonic, inclination and positioning sensors, in addition to all the electronic components necessary for the operation thereof, all of these mounted in a motherboard and a software experience or video game pre-installed in an electronic computational device, it being able to be a tablet. Said video game uses said data, once they have been transmitted through bidirectional communication channel by means of a connection cable or wirelessly, in order to modify any victory or defeat condition of the aforementioned video game and in order to propose interactions that the user has to carry out with the accessory device.

The accessory device is characterized in that it is able to be housed inside other objects and work autonomously.

The accessory device is characterized in that it uses the data from the environment that have been stored previously in a video game. Said data can be used in order to modify the appearance of characters and scenarios and any victory or defeat condition of the video game.

The accessory device is characterized in that it stores the data that was captured and transmitted to the video game on a user account hosted on a remote server.

The accessory device is characterized in that it can transmit said data to an electronic computational device by using a connection cable, it being able to use this four-pole 3.5mm audio terminal, or wirelessly being able to use the IEEE 802.15.1 communication protocol in any of the variations thereof.

The accessory device is characterized in that it transmits data to an electronic computational device by using a bidirectional communication channel that can additionally be used in order to update the firmware of the accessory device.

### Brief description of the drawings

As a complement to the description provided herein, and for the purpose of helping to make the characteristics of the invention more readily understandable, a set of drawings is attached as an integral part of said description, which, by way of illustration and not limitation represent the following.
Figure 1.- corresponds to the general operation diagram of the invention and in it all the blocks of elements are represented that make it up and the way in which they are connected.
Figure 2.- shows the exploded view that details the physical subassemblies that make up the accessory device for capturing and storing multi-sensor data of the invention, as well as the main components thereof.
Figure 3.- corresponds to the diagram of the electronic components of the accessory device and in which all the elements that make it up are represented, facilitating the understanding of the operations and the coordination between them.
Figure 4.- corresponds to the interaction flow proposed by the software experience and facilitates the understanding of the implementation architecture thereof.
Figure 5.- illustrates the functional nature of augmented reality of the software experience.

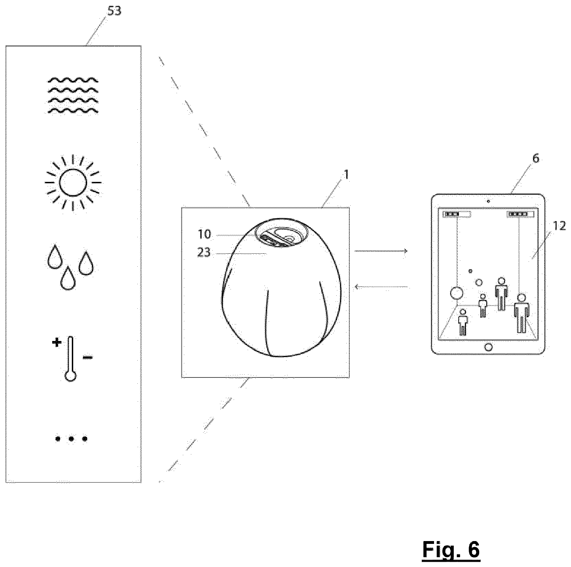

Figure 6.- has a simplified diagram of the capture, storage and transmission of multi-sensor data of the invention.

In the six drawings, the numbers represent elements that are equivalent and that carry out the same function.

### Preferred embodiment of the invention

The description provided below in conjunction with the provided drawings does not represent the only way of carrying out the invention presented in this specification. The description comprises the elements and logical steps needed in order to build and operate this preferred embodiment of the invention. The embodiment of the elements does not follow a particular order or sequence and can be carried out in any order or simultaneously if necessary.

The person skilled in the art will understand that others skilled in the art could carry out interpretations of the invention, since there are numerous variations of this preferred embodiment that can follow the basic operating principles of the accessory device described in this specification, including when different game rules and structures (gameplay) are applied and even when said gameplay is integrated with different artistic interpretations for the worlds and characters of the video game or use a different main metaphor and even when all the components described in this preferred exemplary embodiment or components additional to those described in this preferred embodiment are not used.

In this preferred embodiment of the invention, an egg is used as the representational item that provides the appearance for the toy 1 and main metaphor of the game, which the user must take care of since the goal thereof is to incubate the characters of the game.

In this preferred embodiment of the invention, the set of rules of the game (gameplay) is characterized by the victory condition of the video game that consists of freeing the highest number possible of characters incubated in the egg in order to lead a global ranking of all the users that are registered in the remote server 2. Each of the characters that the player frees stays stored on their user account.

The characters are generated from seeds 3 that must be incubated inside the game (1) in order to obtain characters that will be born in a character repository 4 represented metaphorically by a canvas in the graphical user interface 5, which in this preferred embodiment of the invention is shown to the user through the touch screen of the tablet 6. The characters of the game have different phases of maturity from baby characters 7 to adult characters 8. In order to convert a seed 3 into a baby character 7, we need to incubate it in the toy 1 and in order to convert a baby character 7 into a more adult character, we have to take care of the character in the form of minigames 9 that will have to be completed with the character to be developed to be developed in addition to repeating the incubation thereof successive times in the toy 1.

Each character has a unique appearance and personality depending on how the incubation was completed, in other words, the data from the environment 53 captured by the accessory device 10, the geographical location and the date reflect in the nature of the incubated character.

Each character has an associated status score 11, when said score reaches certain predefined numbers, the video game 12 places as a progress condition that said character play a minigame 9 or the character be placed back in incubation using the toy 1.

When a user needs to complete the incubation of a seed 3 in order to obtain a new baby character 7 or evolve a baby character 7 to an adult character 8, the video game gives the user precise instructions on how to complete the interaction in the form of an on-screen notification accompanied by an audio clip, called recipe 13. When a character or seed 3 is in the incubation process, it temporarily disappears from the character repository 4.

The recipes (13) give precise instructions to the user on how to connect the accessory device 10 with the tablet 6 by recognizing the available communication channel. The recipes 13 propose precise actions that the user must carry out with the toy 1, said actions could be, without being limited to: quantifiable, such as for example, "place the toy in the sun for two hours" or descriptive, such as for example "take the toy to school" or "sleep with the toy". If the recipes are not completed with enough precision, the character is lost, permanently disappearing from the character repository 4 and adding a negative score to the ranking score 14 of the user.

In order to carry out the incubation, the user must manually connect the cable equipped with four-pole 3.5mm audio terminals 15 between the headphone output of the tablet 6 and the four-pole 3.5mm audio terminal 16 of the accessory device 10 or if the tablet 6 has wireless communication capabilities, by simply placing the toy 1 and the tablet in proximity, once the standard pairing according to the IEEE 802.15.1 protocol version 4 u has been completed in a manner invisible to the user, the toy 1 detects this connection and starts the bidirectional communication 24 of a data flow by means of modulation by frequency change, by using a carrier frequency and a set of sub-frequencies that signal different symbols that are then decoded.

During this bidirectional communication, the tablet 6 transmits the necessary parameters for the incubation to the accessory device 10 if there is incubation, in other words, the set of commands executable by the 8-bit application microcontroller 17 of the accessory device 10 that define which sensors should be activated, the frequency of the readings and for how much time they should be carried out. It also transmits other parts of software, the end of which could be the correction of errors; this process is called firmware updating.

In the other direction, the accessory device 10 transmits the data from the set of sensors and stored in the memory of the 8-bit application microcontroller 17 to the tablet duly processed, if there is data.

In order to start the incubation process, the user must shake the toy until they receive a visual and auditory notification using the status notifiers of the accessory device 10. Once the incubation process ends, the accessory device 10 will emit another different visual and auditory communication. The user will also receive a push notification on their tablet 6, the contents of which will inform the user that the incubation has ended.

At any moment during the incubation, the user can know if the incubation status is correct or, on the other hand, if the incubation process was not completed correctly by shaking the toy 1, the status notifiers will emit an auditory and visual signal that is different depending on the status of the process.

Alternatively, the user can visualize the status of the incubation using the camera mode 46 in the video game 12 by activating the augmented reality module 18 focusing on the toy 1.

Each time an incubation process has ended in a satisfactory manner, the next time the user connects the accessory device 10 to the tablet 6, whether it be physically by means of the connection cable with four-pole 3.5mm audio terminals 15 or wirelessly, the incubated character will be added back to the character repository 4.

Once the characters arrive at their maximum status score 11 they need to be freed from the repository, increasing the corresponding ranking score 14 of the user.

The system of the invention comprises two main elements, a physical one and a digital one, which provide the previously described gameplay to the user, we will describe them in detail below.

### The Physical element:

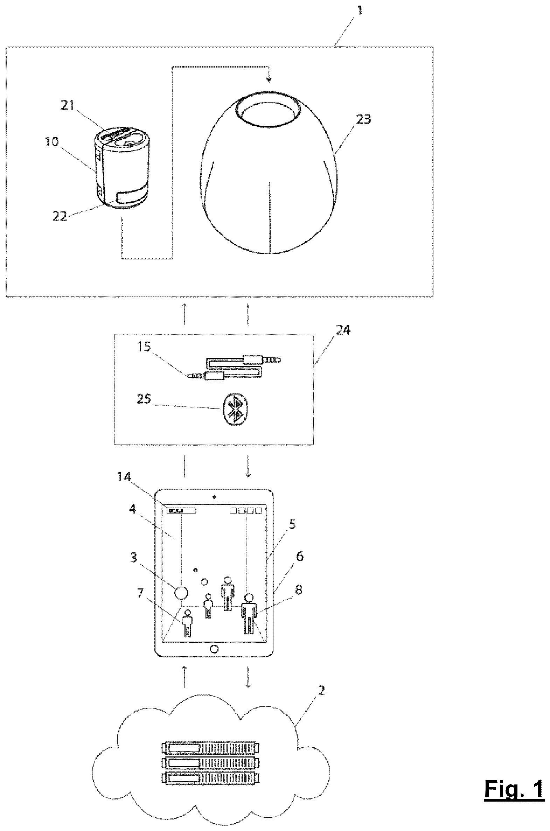

As seen in *Figure 1* the accessory device 10 is a closed autonomous device, of a small size and portable nature and cylindrical shape, that has a series of windows and openings 21 in the exterior thereof in addition to a hatch for replacing the battery 22. The exterior design of the accessory device 10 enables it to be housed inside a host object 23. In this preferred embodiment, the host object 23 has a longitudinal opening that crosses it such that the accessory device 10 stays secured and fastened using pressure press fitting the inner walls of the host object 23. In this preferred embodiment, the host object 23 is a figurative representation of an egg made of heat-stable material although in other preferred embodiments it could be made from a thermoplastic material, textile material, wood or metal and could represent any other object. The figure of the egg represents the main metaphor of the gameplay proposed by this preferred embodiment of the invention. The set made up of the accessory device 10 and the host object 23 is designated as the toy 1.

The accessory device 10 captures, processes and stores the conditions of the environment 53 in which it is situated. Said information can be transmitted in real or delayed time to a digital software experience in the form of a video game 12 installed in an electronic computation device that in this preferred embodiment of the idea is a tablet 6. In order for said tablet 6 to execute the video game 12, it needs an operating system, whether it be iOS (registered trademark) or Android (registered trademark), a graphical user interface 5 in the form of a touch screen, a camera, a four-pole 3.5mm audio output and/or the capacity to support wireless communication with the standardized IEEE 802.15.1 communication protocol 25. In order to transmit the data, a bidirectional communication channel 24 is needed that in this preferred embodiment is physical by means of a cable equipped with four-pole 3.5mm audio terminals 16 that connects at one end to the accessory device 10 and at the other to the headphone jack of the tablet and additionally wirelessly by means of the use of the IEEE 802.15.1 communication protocol 25.

The data transmitted from the accessory device 10 to the tablet 6 is used in the video game 12 in order to modify the victory or defeat conditions, for the modification and gestation of characters and for the formulation of rankings. Upon using the bidirectional communication, the data transmitted from the tablet 6 to the accessory device 10 are used to update the firmware that regulates the internal use thereof.

In order to play the video game, the user must create a user account 26 on which all the data referring to it are locally stored on the tablet 6. When the tablet 6 has an internet connection, the data from the account synchronize with a remote server 2 using a TCP/IP protocol, where all the data from all the user accounts of the product are stored. Upon applying analytical processes to the data set from all the user accounts, global user rankings can be formulated and actions to improve the gaming experience as a whole can be automated.

Although in *Figure 1* only an accessory device 10, a host object 23, a tablet 6 executing a video game 1 and a remote server 2 are seen, it is understood that the system can be made up of one or several of the represented elements.

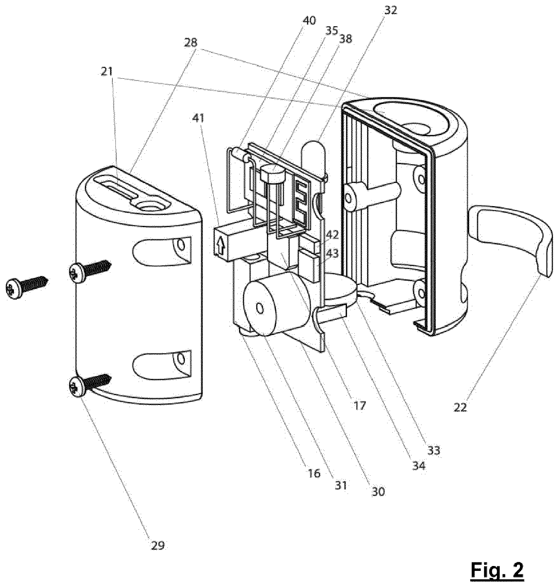

As seen in *Figure 2**,* the accessory device 10 is made up of, in this preferred embodiment, a cylindrical casing 28 made with a thermoplastic material that has two portions that fit together and are joined by screws 29, the motherboard 30 is made of epoxy glass substrate and double-sided with a printed circuit that is securely fastened between them when they close. The motherboard 30 that has a set of sensors soldered to it such that those that need it are exposed through windows and openings 21 of the casing 28. The motherboard 30 also incorporates a buzzer 31 and a red-green-blue tricolor light-emitting diode 32 that are used to emit different light and sound signals to the user regarding the operations of the device. The circuit is powered by a button-type battery 33 that is mounted in the motherboard 30 due to the effects of a battery support 34 and that is accessible from the exterior through the battery replacement hatch 22. Lastly, the IEEE 802.15.1 module with 32-bit microcontroller 35, the 8-bit application microcontroller 17 and the female terminal for the four-pole 3.5mm jack 16 are also mounted in the motherboard.

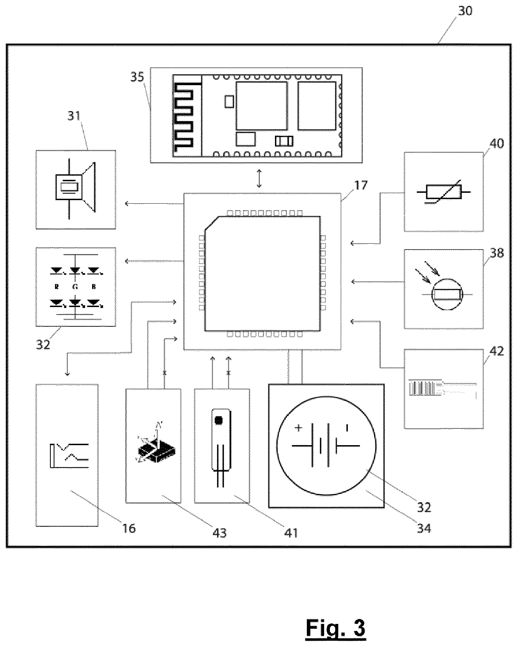

As seen in the diagram of Figure 3, the motherboard 30 comprises all the electrical and electronic components necessary for the operation thereof and that are optimal for the accessory device 10 to be functional, these being:
- A photoresistor 38 that enables the accessory device 10 to carry out light intensity measurements. It is a resistor that is variable depending on the light conditions, the voltage value of which is sampled and digitized. This system provides suitable precision at a very low cost.
- A thermistor with a temperature coefficient 40 that enables the accessory device 10 to carry out temperature readings in the environment. It is a resistor that is variable depending on the ambient temperature, the voltage value of which is sampled and digitized. It provides suitable precision at a low cost.
- A mechanical switch 41 activated by the effects of gravity and that enables the detection of when the device is shaken or inclined. This switch can also be used to trigger immediate actions in the accessory device 10 such as starting to take the readings of the rest of the sensors. The microcontroller system can be kept in an energy-efficient state until the switch is activated, which enables energy to be saved.
- A red-green-blue tricolor light-emitting diode 32 used to provide information on the status of the accessory device 10 to the user. The light intensity of each color is controlled by pulse-width modulated signals, enabling the visualization of distinct colors and animated transitions between them.
- A piezoelectric buzzer 31 controlled by a digital square signal of variable frequency, which equips it with the capacity to emit notes and monophonic melodies. These sounds are combined with the tricolor light-emitting diode in order to provide information to the user.
- An 8-bit application microcontroller 17 with reduced instruction set architecture, random access memory, flash-type non-volatile memory and erasable and programmable read-only memory, with a module generating pulse-width modulated signals, analogue-digital converter, timers, digital inputs and outputs and management features for electrical consumption. The microcontroller executes the firmware programmed in the flash memory thereof in-factory, which is responsible for controlling the operations of the accessory device 10.
- An IEEE 802.15.1 module incorporating a 32-bit microcontroller 35, baseband radio circuitry and antenna. The set of protocols that makes up the IEEE 802.15.1 standard is implemented in software layers organized in the form of stacks. This stack of protocols is executed by the microcontroller of the module assisted by a Real-Time Operating System (RTOS), which communicates with the application microcontroller by means of the RS-232 protocol with logical levels of Low-Voltage Transistor-Transistor Logic (LVTTL) comprised between 0 and 3.3 volts. In this way, the processor of the IEEE 802.15.1 module manages the low-level wireless communication while the application microcontroller manages the logic and control of the rest of the components, as well as the interaction with the user by occasionally using the communication functions offered by the module and the software thereof.
- A relative moisture sensor 42 with an analog interface, which shows in one of the output pins a voltage value proportional to the relative moisture. The 8-bit application microcontroller 17 samples and digitizes this value for the subsequent storage thereof. This type of analog sensor has a lower cost than the digital equivalents thereof.
- An accelerometer with magnetic compass 43 encapsulated therein is combined with a digital 3-axis accelerometer with a sensitivity range of ± 3 g and digital magnetometer with a sensitivity range of ± 3 gauss. The component communicates with the application microcontroller by means of the I²C Inter-Integrated Circuit Bus. Additionally, a break line enables the application microcontroller to alert when the device moves or is in freefall. This sensor enables the detection of whether the device is being shaken, or moved in another way, in addition to the orientation thereof relative to the magnetic poles of the Earth.
- A female connection for a four-pole 3.5mm audio terminal 37 assembled in the board and with an inner switch that is actuated when the male audio connector is introduced. The four poles provide two audio input channels corresponding to the left and right earphones, and an output channel corresponding to the hands-free microphone, in addition to a common ground.
- A support for a battery 34 in order to be mounted in the board.
- A non-rechargeable button-type battery 33 with a capacity of 225 milliamps-hour (mAh).

Both the 8-bit application microcontroller 17 as well as the rest of the components are soldered to the motherboard 30 by means of the application of solder paste through a mask by means of automated machines. The circuit is provided with test points that have the dual purpose of verifying the correct operations thereof in-factory, and transferring the initial program and data to the internal memories of the 8-bit application microcontroller 17 and of the IEEE 802.15.1 module 35.

The soldering is carried out in an infrared reflow soldering oven following the JEDEC standard. The board is mechanized such that is perfectly fits in the casing thereof with the components that should stay exposed being correctly aligned with the holes that it has for this purpose.

Upon applying power for the first time or after the installation or changing of a new battery, both the IEEE 802.15.1 module 35 and the 8-bit application microcontroller 17 start to execute the code stored in-factory in the non-volatile memories thereof. First, both processors execute a boot loader that enables the application code in the production environment to be updated, in order to finally start the execution thereof.

In the case of the IEEE 802.15.1 module 35 the Real-Time Operating System and the protocol stack are executed which provides the 8-bit application microcontroller 17 with connectivity with the tablet 6 through a RS-232 series port with LVTTL levels of voltage.

The application code of the 8-bit application microcontroller 17 manages the wireless connection of the accessory device 10 to the tablet 6 though the RS-232 link, taking readings from the sensors at intervals of time defined by the algorithm of the video game 12 installed in the tablet 6 and also generates the square wave and pulse-width modulated signals in order to control the tricolor light-emitting diode 32 and the piezoelectric buzzer 31 in order to provide the user with feedback.

The output pins of the 8-bit application microcontroller 17 have enough output amperage to directly power both the tricolor light-emitting diode 32 and the piezoelectric buzzer 31. The analog-digital converter integrated inside the 8-bit application microcontroller 17 digitizes, with a precision of at least 10 bits, the voltage value registered in the analog sensors, configured as a voltage splitter with the assistance of an additional resistor.

In order to minimize electrical consumption, when the accessory device 10 is inactive upon not having an active wireless connection with the tablet 6 and not carrying out readings from the set of sensors, then several portions of the circuit are deactivated such as the tricolor light-emitting diode 32 and piezoelectric buzzer 31 among others.

The system abandons this low-consumption mode when an interruption is received from the accelerometer with a magnetic compass 43, which has a dedicated break line, or the logical level present in the mechanical switch 41 changes, or an internal timer that is kept in operation expires.

It is possible to store information persisting in the DCADMV by using the erasable read-only non-volatile memory of the 8-bit application microcontroller 17 for tasks such as associating the accessory device 10 with a specific tablet 6 or with an identifier of a specific user account 26.

The entire system is powered by the voltage provided by the button-type battery 33 from the moment of the first connection thereof with the battery support 34 until it completely runs out. In the case of the battery completely running out, the persisting information stored in the erasable read-only non-volatile memory of the 8-bit application microcontroller 17 will stay intact, for which reason the information relating to the identifier of the user account 26 will not be lost.

### The digital element:

The algorithms used to create the software experience in the form of executable program or application referred to as video game 12 in this specification, use programming languages, compilers and standardized libraries and these being explicitly excluded from the scope of this invention, since, although they make up part of it, the aim of this invention is not the improvement of said programming languages, compilers or standardized libraries.

The video game 12 that is executed in the tablet 6 is the guiding thread of the gaming experience or gameplay, this digital video game uses the data downloaded from the accessory device 10 in order to satisfy victory or defeat conditions during the development of the game and also generates the algorithms that define the regularity and the type of measurements that the accessory device 10 will carry out. Said video game should be previously installed on the tablet 6 so that the accessory device 10 works. In order to install the video game, the tablet 6 must be connected to the internet and download the game through the regular digital distribution networks whether they are web based or through Google Play (registered trademark) or App store (registered trademark).

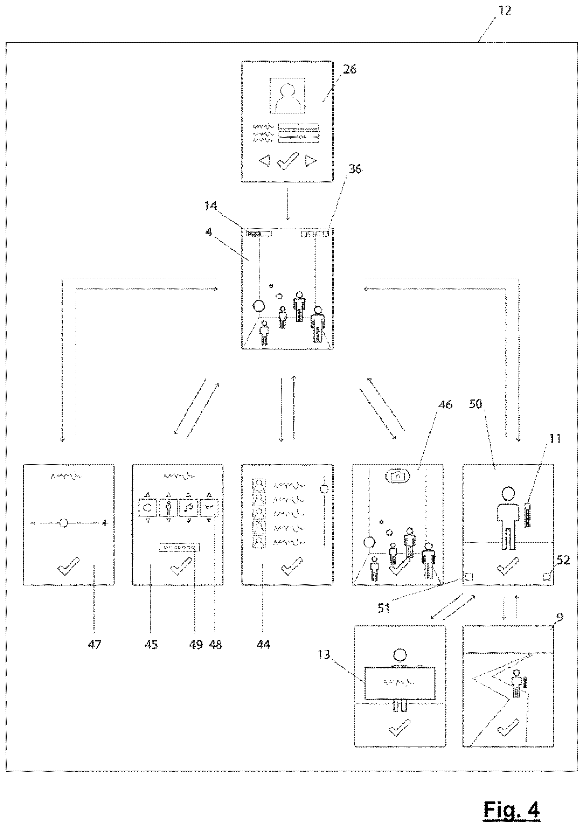

As we can see in *Figure 4* , when the user executes the video game 12 for the first time, the video game proposes an interaction flow in order to create the user account 26 and in said flow the necessary user data is registered for the identification thereof, comprising data such as full name, alias, picture, age, gender, location etc..., said data is locally stored in the memory of the tablet 6 and is automatically and invisibly synchronized with the remote server for the user when the tablet 6 has an internet connection.

After creating the user account, the graphical user interface 5 makes an automatic transition to the character repository 4 view. From the character repository 4, the ranking score 14 of the user, in the form of an indicator and, in the form of icons 36, the access to the global using ranking 44, the access to the market 45, to the camera mode 46 and the settings 47 can be seen. All the baby characters 7, adult characters 8 or seeds 3 that the player has created during their gaming experience can be seen positioned on a canvas. The first time that the user accesses the character repository 4 they only have one or several seeds 3 available.

From the character repository 4 view, the user can access the settings view 47 where the desired character incubation time can be defined by means of a standardized interaction flow.

From the character repository 4 view, the user can access the market view 45. The market view 45 is only available when the tablet 6 has an internet connection. From the market view 45, the user can acquire executable parts of software that take the shape of seeds 3, minigames 9 or digital accessories 48 to personalize the characters in the graphical user interface 5. In order to carry out this acquisition, the user will need to introduce a redeemable code 49 that can be acquired in the available digital distribution platforms such as through the web, through Google Play (registered trademark) or App store (registered trademark) using any of the payment methods valid on said platforms. Said redeemable codes could also be acquired at newsstands or large department stores. When a valid redeemable code 49 is inserted by following the interaction flow proposed by the video game 12 in the market view 45, the remote server 2 makes the pertinent verifications and sends the corresponding portion of software to the purchase, which is immediately installed and executed after it is downloaded.

From the character repository 4 view, the user can access the global user ranking view 44. In the global user ranking view 44, the user can visualize a list ordered from highest to lowest of the ranking scores 14 of all the users registered on the remote server 2. The ranking is automatically updated each time the tablet 6 has an internet connection.

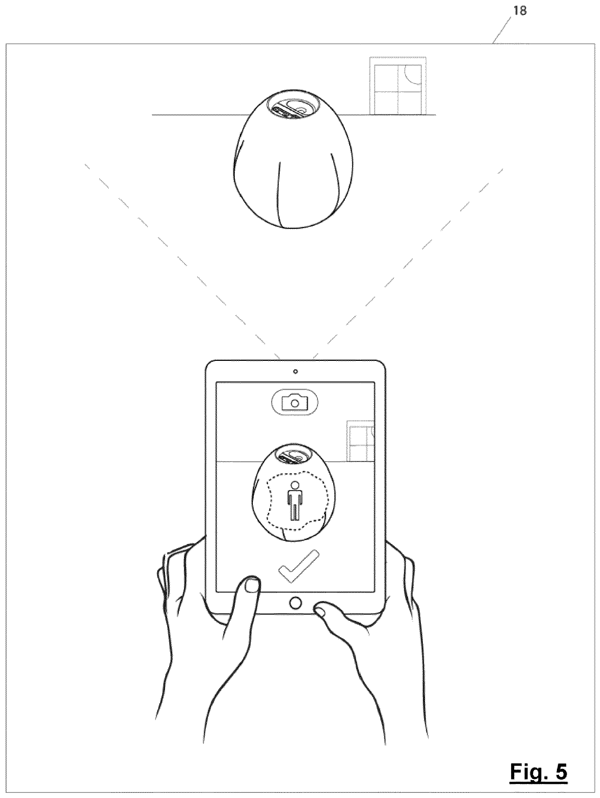

From the character repository 4 view, the user can access camera mode 46. With the camera mode 46, the user can take picture or video screen captures of the graphical user interface, including their characters. If the user focuses on the toy 1, the augmented reality module of the video game provides a superimposed image of the character or seed 3 inside the toy 1, as seen in *Figure 5**.* The user can also take a picture or video screen capture of this moment. When the tablet 6 has an internet connection, the user has the option to share the captured images or videos via email or social networks such as, but without being limited to: Facebook (registered trademark), YouTube (registered trademark), Snapchat (registered trademark), WeChat (registered trademark) or WhatsApp (registered trademark).

When the player selects any of the baby characters 7, the adult characters 8 or seeds 3 that are available in the character repository 4, they access the detail view 50. In the detail view 50, the user sees an indicator of the status score 11 and the icons to access the incubation 51 and to access the minigames 52. Said icons are only active when the status score 11 reaches certain predetermined levels.

From the detail view 50, when the minigame icon 52 is active, the user can access a minigame 9 with which they can increase the status score 11 of the selected character. The different available minigames 9 can be accumulated and are downloaded from the remote server 2 and stored in the local memory of the tablet 6 when it has an internet connection.

From the detail view 50, when the incubation access icon 51 is active the user can virtually transfer the character or the seed 3 to the toy 1. When the user chooses this option, they receive precise instructions in the form of an on-screen notification accompanied by an audio clip, called recipe 13. The recipe 13 guides the user in the process of connecting the accessory device 10 to the tablet 6, whether by means of the use of a data transmission cable with four-pole 3.5mm audio terminals 15 or wirelessly by means of the IEEE 802.15.1 communication protocol 25 and provides precise instructions for the incubation process.

When the tablet 6 has an internet connection, portions of software can be downloaded by way of updates, in a manner invisible to the user.

### Industrial application

The accessory device 10 is especially intended to create new entertainment products intended to be sold directly to the end consumer. Alternatively, it can be applied by video game editors or toymakers as an innovative solution to renew toys that previously existed on the market or launch new toys under licensing contracts.

The end consumer for this type of product can be children or adults from 6 to 99 years of age.

## Claims

1. A system of capturing and storing multi-sensor data for improving gaming experience in video games comprising
- an electronic computational device provided with a software experience or video game (12); and
- a toy (1) provided with an accessory device (10) for capturing and storing multi-sensor data on the inside thereof, the accessory device being an autonomous device of a small size, the accessory device comprising a casing, which contains sensors such as temperature, moisture, movement, light, ultrasonic, inclination and positioning sensors, in addition to all of the electronic components necessary for the operations thereof, all of these mounted in a motherboard (30),
said software experience or video game (12) being adapted to compare said data, once they have been transmitted from the accessory device to the electronic computational device through a bidirectional communication channel, with victory or defeat conditions of the software experience or video game (12).

2. The system according to the preceding claim, **characterized in that** the bidirectional communication channel is a connection cable.

3. The system according to the preceding claim, **characterized in that** the connection cable comprises four-pole 3.5mm audio terminals.

4. The system according to claim 1, **characterized in that** bidirectional communication channel is wireless.

5. The system according to the preceding claim, **characterized in that** bidirectional communication channel is based on the IEEE 802.15.1 communication protocol (25).

6. The system according to any one of the preceding claims, **characterized in that** the electronic computational device is a tablet (6).

7. The system according to any one of the preceding claims, **characterized in that** it further comprises a remote server (2) adapted to store the data that was captured and transmitted to the video game on a user account.

8. A method for the interaction with a software experience or video game (12) that comprises the steps of:
- capturing multi-sensor data in an accessory device (10) for capturing and storing multi-sensor data provided on the inside of a toy (1);
- transmitting the multi-sensor data through a bidirectional communication channel to an electronic computational device provided with the software experience or video game (12); and
- comparing the multi-sensor data with victory or defeat conditions of the software experience or video game (12).

9. The method according to the preceding claim, **characterized in that** it further comprises the step of:
- storing the previously captured multi-sensor data in the accessory device (10) for capturing and storing multi-sensor data before transmitting the multi-sensor data through a bidirectional communication channel to the electronic computational device.

10. The method according to any one of claims 8 to 9, **characterized in that** it further comprises storing the data that was captured and transmitted to the electronic computational device on a user account housed on a remote server (2).

11. The method according any one of claims 8 to 10, **characterized in that** it further comprises the step of
- updating the firmware of the accessory device (10) for capturing and storing multi-sensor data by using the bidirectional communication channel.

12. The method according to any one of claims 8 to 11, **characterized in that** it further comprises the step of obtaining the victory or defeat conditions associated to multi-sensor data from a remote server (2).

13. The method according to the preceding claim, **characterized in that** the step of obtaining the victory or defeat conditions associated to multi-sensor data from the remote server (2) is carried out by means of redeeming a previously obtained code.
